# EUROPEAN PATENT SPECIFICATION

(11) **EP 4 477 609 B1**
(45) Date of publication and mention of the grant of the patent: **31.12.2025**
(21) Application number: 24181244.5
(22) Date of filing: 10.06.2024
(51) Int. Cl.: B66B 25/00

(54) **AUTOMATIC CONVEYING DEVICE AND AUTOMATIC START METHOD FOR DETERMINING THE PRESENCE OF EXTERNAL OBJECTS ON AN AUTOMATIC CONVEYING DEVICE**
AUTOMATISCHE FÖRDERVORRICHTUNG UND AUTOMATISCHES STARTVERFAHREN ZUR BESTIMMUNG DER ANWESENHEIT EXTERNER OBJEKTE AUF EINER AUTOMATISCHEN FÖRDERVORRICHTUNG
CONVOYEUR AUTOMATIQUE ET PROCÉDÉ DE DÉMARRAGE AUTOMATIQUE DE DÉTERMINATION DE LA PRÉSENCE D'OBJETS EXTERNES SUR UN CONVOYEUR AUTOMATIQUE

(30) Priority: 16.06.2023 CN 202310721646
(43) Date of publication of application: 18.12.2024
(73) Proprietor: Otis Elevator Company, Farmington, Connecticut 06032 (US)
(72) Inventor: Liu, Wentong, Hangzhou, Zhejiang, 310019 (CN); Cheng, Lifei, Hangzhou, Zhejiang, 310019 (CN); Hu, Zhaoxia, Hangzhou, Zhejiang, 310019 (CN)
(74) Representative: Schmitt-Nilson Schraud Waibel Wohlfrom Patentanwälte Partnerschaft mbB

(56) References cited:
- EP-A1- 3 140 235
- JP-A- 2016 185 856
- JP-B2- 5 788 848

## Description

The present invention relates to the field of automatic conveying devices and an automatic start method for an automatic conveying device.

Automatic conveying devices such as escalators and moving walkways are generally started manually. In places with a large number of automatic conveying devices, such as in large shopping malls or airports, it is tedious to start the automatic conveying devices one by one. It is expected that the automatic conveying devices can be started automatically. For safety purposes, it is necessary to ensure that there are no external objects such as passengers, pets, or goods on the automatic conveying devices before the automatic start.

It is conceived that various sensors are to be used to achieve this objective. For example, when using camera devices, it is necessary to determine, either using image algorithms or through judgement by people, whether there are external objects on the automatic conveying device. In addition, if it is expected to cover the entire carrying range of the automatic conveying device, multiple cameras are required and the cameras are required to be installed at specific positions. Furthermore, various factors, such as the cameras being blocked, also need to be considered.

Another option is infrared light curtain, which consists of a plurality of sets of infrared light transmitters and infrared light receivers distributed along the length direction of the skirt panel. A plurality of light transmitters are arranged at certain intervals (e.g., corresponding to the spacing between steps) at the skirt panel on one side, and the corresponding plurality of light receivers are arranged at the skirt panel on the opposite side. When the respective light transmitters are turned on, a light curtain is formed, and when the light is blocked, it is determined that there is an external object on the automatic conveying device. This type of device has a high cost and it is difficult to install the plurality of light transmitters and light receivers along the skirts panels on both sides. In addition, it is difficult to repair or replace the light transmitter(s) or receiver(s) when they malfunction.

JP 2016 185856 A discloses a safety device of a passenger conveyor that can detect instantaneously falling of a passenger. The safety device of a passenger conveyor is provided in a passenger conveyor equipped with a plurality of footsteps which are endlessly connected, circulate and move, balustrades standingly provided on both sides of the footsteps and moving handrails which are supported on uppers parts of the balustrades and move in synchronization with the footsteps, which is provided with a laser scan sensor arranged so that a scan direction thereof is along inclined parts of the moving handrails, and announces whether operation speed of the passenger conveyor should be reduced or the conveyor should be stopped based on output of the laser scan sensor. JP 2016 185856 A discloses the preamble of claim 1.

EP 3 140 235 A1 discloses a passenger detector for use in a passenger conveyor system that includes a structured light source, a structured light detector, and a controller. The structured light source is operable to project light into a detection area in a predetermined projected pattern. The structured light detector is operable to generate reflected light signals indicative of light reflected back toward the structured light detector from the detection area. The controller is operable to receive the reflected light signals from the structured light detector, and operable to process the reflected light signals to make a determination as to whether a passenger is disposed within a detection area.

JP 5 788848 B2 discloses a passenger conveyor control device including: preliminary operation execution means for executing preliminary operation of the passenger conveyor; remaining object determination means for determining whether or not an object remains on the passenger conveyor based on a drive value that varies with drive of the passenger conveyor in the preliminary operation; stopping means for stopping the drive of the passenger conveyor when the remaining object determination means determines that the object remains on the passenger conveyor; and actual operation execution means for executing actual operation of the passenger conveyor when the remaining object determination means determines that the object does not remain on the passenger conveyor.

The object of the present application is to solve or at least alleviate the problems existing in the prior art. The object is achieved by the subject-matter of each main claim. Advantageous embodiments are laid out in the dependent claims.

According to one aspect of the present invention, an automatic conveying device is provided, comprising:
a first end and a second end opposite to each other; and
a middle section between the first end and the second end;
wherein, the automatic conveying device further comprises one or more first detection devices arranged on one or both sides of the automatic conveying device, where each first detection device has a detection range that is substantially a plane area, and the detection range of each first detection device covers at least a portion of the middle section; and
a processor connected to the one or more first detection devices, and configured to determine, based at least partially on signals detected by the one or more first detection devices, whether an external object is present on the automatic conveying device.

Particular embodiments further may additionally include at least one, or a plurality of, the following optional features:
Optionally, in an embodiment of the automatic conveying device, the detection range of one first detection device or a combination of detection ranges of a plurality of first detection devices covers the entire middle section.

Optionally, in an embodiment of the automatic conveying device, the one or more first detection devices are radar units, such as LiDARs, where the detection range of each first detection device is substantially a fan-shaped plane area.

Optionally, in an embodiment of the automatic conveying device, the detection range of each first detection device is parallel to a reference plane of the middle section, and/or a maximum distance between the detection range of each first detection device and the reference plane is less than 1 meter or less than 0.5 meters, where the reference plane of the middle section is a plane where the middle section is located or a plane obtained by connecting leading edges of step boards of the middle section.

Optionally, in an embodiment of the automatic conveying device, the automatic conveying device is a moving walkway with the first end, the second end, and the middle section located in the same plane, where the detection range of one first detection device or the combination of the plurality of first detection devices also covers the first end and the second end of the moving walkway.

Optionally, in an embodiment of the automatic conveying device, the automatic conveying device is an escalator, the automatic conveying device further comprising: one or more second detection devices and one or more third detection devices, where the detection range of the one or more second detection devices is a plane area covering the first end, and the detection range of the one or more third detection devices is a plane area covering the second end.

Optionally, in an embodiment of the automatic conveying device, the one or more second detection devices and the one or more third detection devices are radar units, such as LiDARs, where the detection range of each of the one or more second detection devices and the one or more third detection devices is substantially a fan-shaped plane area.

Optionally, in an embodiment of the automatic conveying device, the processor is configured to determine, based on signals detected by the one or more first detection devices, the one or more second detection devices, and the one or more third detection devices, whether an external object is present on the automatic conveying device.

Optionally, in an embodiment of the automatic conveying device, the one or more first detection devices are arranged inside skirt panels on one or both sides of the automatic conveying device, and the skirt panels comprise transparent window strips extending in a direction parallel to the reference plane, so that the skirt panels do not block the detection range of the first detection device(s).

Optionally, in an embodiment of the automatic conveying device, the first detection device is arranged outer side of the skirt panel(s) on one or both sides of the automatic conveying device and on an outer side of a transparent sideplate on the skirt panel(s).

The processor is configured to determine, upon receiving a start-up command, whether an external object is present on the automatic conveying device, where if no external object is present, the automatic conveying device is started, and if an external object is present, the automatic conveying device is not started.

According to a second aspect of the present invention, an automatic start method for an automatic conveying device is provided, which method comprises:
arranging one or more first detection devices on one or both sides of the automatic conveying device, where each first detection device has a detection range that is substantially a plane area, and the detection range of each first detection device covers at least a portion of the middle section; and
determining, based at least partially on signals detected by the one or more first detection devices, whether an external object is present on the automatic conveying device.

Optionally, the detection range of the one first detection device or the combination of detection ranges of the plurality of first detection devices covers the entire middle section.

Particular embodiments further may additionally include at least one, or a plurality of, the following optional features:
Optionally, the method further comprises: covering a first end and a second end of the automatic conveying device with the detection range of one first detection device or the combination of detection ranges of the plurality of first detection devices when the automatic conveying device is a moving walkway.

Optionally, the method further comprises: arranging one or more second detection devices at a first end of the escalator, and arranging one or more third detection devices at a second end of the escalator when the automatic conveying device is an escalator, where the detection range of the one or more second detection devices is a plane area covering the first end, and the detection range of the one or more third detection devices is a plane area covering the second end; and
determining, based on signals detected by the one or more first detection devices, the one or more second detection devices, and the one or more third detection devices, whether an external object is present on the automatic conveying device.

The automatic start method for an automatic conveying device comprises:
starting the automatic conveying device if no external object is pressent, and not starting the automatic conveying device if an external object is pressent.

According to the embodiments of the present invention, a device and an automatic start method for an automatic conveying device in a simple and efficient manner have been achieved.

With reference to the accompanying drawings, the disclosure of the present application will become easier to understand. Those skilled in the art would easily understand that these drawings are for the purpose of illustration, and are not intended to limit the protection scope of the appended claims. In addition, in the figures, similar numerals are used to denote similar components, where:
FIG. 1 shows a three-dimensional view of an automatic conveying device according to an embodiment of the present invention;
FIG. 2 shows a side view of an automatic conveying device according to an embodiment of the present invention;
FIG. 3 shows a top view of a middle section of an automatic conveying device according to an embodiment of the present invention;
FIG. 4 shows a top view of a middle section of an automatic conveying device according to another embodiment of the present invention; and
FIG. 5 shows a cross-sectional view of an automatic conveying device according to an embodiment of the present invention.

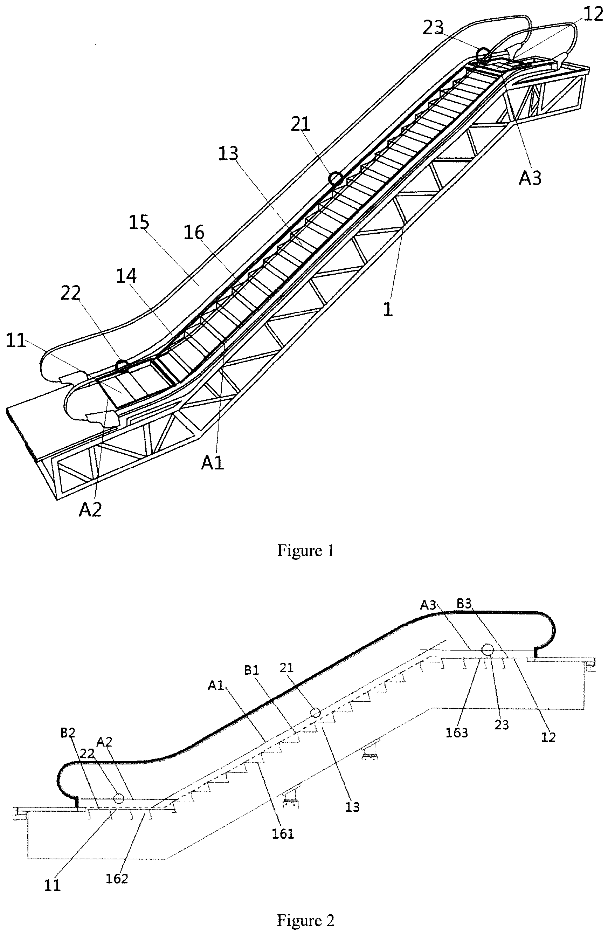

Referring first to FIGS. 1 to 4, an automatic conveying device according to an embodiment of the present invention is shown. It should be appreciated that automatic conveying devices mainly refer to escalators or inclined moving walkways that convey between lower and higher target positions as shown in the figures, or moving walkways that convey between horizontal target positions, or any other similar devices. These devices may include steps or belts as load-bearing devices. It should be appreciated that although an escalator is used as an example herein, those skilled in the art can apply the same or similar devices to other automatic conveying devices based on the same principles.

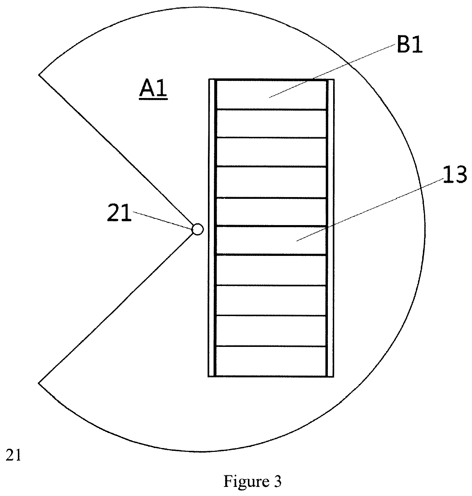

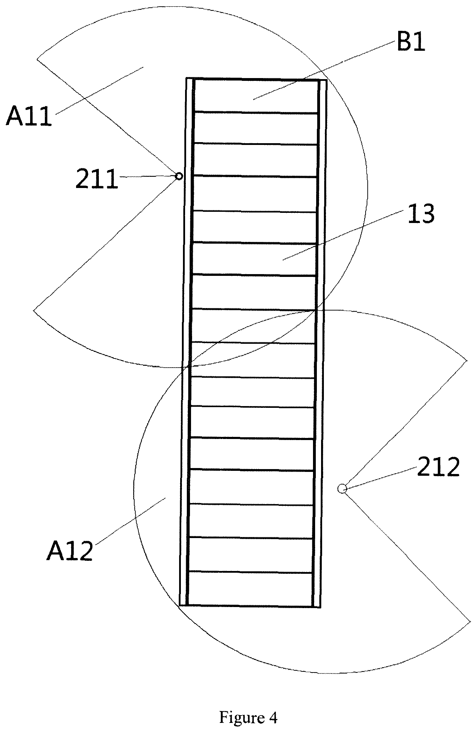

The automatic conveying device comprises: a first end 11 and a second end 12 opposite to each other at two target positions, and a middle section 13 between the first end 11 and the second end 12. In the context, the first end 11, the second end 12, and the middle section 13 refer to the standing positions of the automatic conveying device, such as the exposed portions of step boards, but do not include any associated components of the automatic conveying device, such as handrails, sideplates, and the like. In the case of an escalator, the first end 11 and the second end 12 are located at the lower and higher floors, respectively, while the middle section 13 is an inclined section connecting the lower and higher floors. In addition, the automatic conveying device also comprises one or more first detection devices 21 arranged on one or both sides of the automatic conveying device, and a processor (not shown) connected to the one or more first detection devices 21. One side or both sides of the automatic conveying device refer to the side face(s) of the step boards of the automatic conveying device, such as the left or right side of the step boards as shown in FIGS. 3 and 4, including located on the automatic conveying device or at a certain distance from the automatic conveying device. The detection range of each first detection device 21 is substantially a plane area, i.e., a certain area in a plane, and the detection range of each first detection device covers at least a portion of the middle section 13 (the standing portion, such as the step boards). The so-called "cover" the middle section 13 refers to that the vertical projection of the detection range on the reference plane B1 defined by the middle section 13 covers the middle section 13. For example, in the embodiment shown in FIG. 3, the projection of the detection range A1 of a single first detection device 21 on the reference plane B1 covers the entire middle section 13. In the embodiment shown in FIG. 4, the projection of the combination of the detection ranges A11 and A12 of the two first detection devices 211, 212 on the reference plane B1 covers the step boards of the entire middle section 13. The processor is connected to one or more first detection devices 21 to receive detection signals, and is configured to determine, based at least partially on the signals detected by the one or more first detection devices 21, the presence of external objects, such as human, pets, goods, or other objects, on the automatic conveying device.

In some embodiments, the detection range A1 of the first detection device (see FIG. 3) or a combination of the detection ranges A11 and A12 of a plurality of first detection devices 211, 212 (see FIG. 4) cover the entire middle section 13. In some embodiments, one or more first detection devices 21 are radar units, such as LiDARs. In some embodiments, the detection range of each first detection device 21 is substantially a fan-shaped plane area as shown in FIGS. 3 and 4, where the corresponding central angle of the fan-shaped plane area can be greater than 180 degrees, for example, between 180 degrees and 270 degrees. In the embodiment shown in FIG. 4, the areas of the middle section 13 covered by the two first detection devices 211, 212 do not overlap substaintially. In alternative embodiments, two or more detection devices can also be arranged, so that the areas of the middle section covered by them partially overlap, thereby achieving redundancy in the detection signals. That is, a plurality of detection devices are arranged for mutual corroboration, so as to avoid measurement errors and improve detection accuracy. This can also ensure continued operation in the event of failure of a single detection device.

In the case of a moving walkway (no matter horizontal or inclined), the middle section 13 itself forms a plane, so the reference plane B1 is the plane where the middle section 13 is located. In the case of an escalator, as shown in FIG. 2, the reference plane B1 can be defined as the plane formed by connecting the leading edges of the respective fully unfolded step boards 161. In some embodiments, the detection range of each first detection device may be arranged to be parallel to the reference plane B1. In the case of a plurality of first detection devices, the detection range of each first detection device can be parallel to the reference plane B1. Alternatively, some or all of the detection ranges of the first detection devices can be inclined to the reference plane B1, such as forming an angle within the range of 1 to 20 degrees. In some embodiments, the maximum distance between the effective area of the detection range of each first detection device (i.e., the area covering the step boards of the middle section) and the reference plane B1 may be the same or different. In some embodiments, the maximum distance between the effective area of the detection range of each first detection device and the reference plane B1 may be less than 1 meter or less than 0.5 meters. The radius of the fan-shaped detection plane of a first detection device 21 can reach 20 meters or more, so a single first detection device can cover a middle section 13 having a length more than 30 meters or even close to 40 meters. In the case of a general escalator, only one first detection device 21 can be arranged, or two first detection devices 21 can be arranged oppsite to each other as redundancy. In the case of an escalator that spans multiple floors or a relatively long moving walkway, a plurality of first detection devices 21 or a plurality of sets of first detection devices 21 may be distributed along the entire length of the middle section.

In some embodiments, the automatic conveying device is a horizontal or an inclined moving walkway. Since the step boards at the first and second ends of the moving walkway are in the same plane as the step boards in the middle section, the detection range of the first detection device or the combination of the detection ranges of the first detection devices also covers the step boards at the first and second ends of the moving walkway.

In some embodiments, if the automatic conveying device is an escalator as shown in FIGS. 1 and 2, the reference planes B2 and B3 of the step boards 162, 163 respectively at the first end 11 and the second end 12 of the automatic conveying device are not parallel to the reference plane B1 of the step boards in the middle section 13. In this case, the automatic conveying device further comprises: one or more second detection devices 22 and one or more third detection devices 23, where the detection range A2 of the one or more second detection devices 22 is a plane area covering the first end 11, and the detection range A3 of the one or more third detection devices 23 is a plane area covering the step board 163 of the second end 12. Similarly, one or more second detection devices 22 and one or more third detection devices 23 may be radar units, such as LiDARs. The one or more second detection devices and the one or more third detection devices each have a detection range of a fan-shaped plane area. Alternatively, since the areas required to be covered respectively by the one or more second detection devices 22 and the one or more third detection devices 23 are relatively small, a detection device based on beams or light curtain can also be selected. Accordingly, the processor is configured to determine the presence of external objects on the automatic conveying device based on signals detected by one or more first detection devices, the one or more second detection devices, and one or more third detection devices.

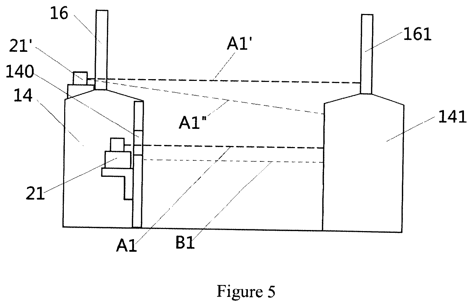

With continued reference to FIG. 5, one or more first detection devices are arranged inside the skirt panel(s) 14 on one or both sides of the automatic conveying device, and the skirt panel 14 comprises a transparent window strip 140 extending in a direction parallel to the reference plane, which is, for example, made of glass or transparent plastic, so that the skirt panel 14 does not block the detection range A1 of the first detection device 21. Although not shown, the same arrangement can also be present in a skirt panel 141 on the opposite side. Alternatively, a first detection device 21' can be arranged outside and on the skirt panel(s) 14 on one or both sides of the automatic conveying device and on the outer side of the transparent sideplate 16. Alternatively, another first detection device can be arranged on the outer side of the transparent sideplate 161 on the opposite side. As shown in the figure, the detection range A1, A1' of the first detection device 21, i.e., the fan-shaped plane area can be parallel to the reference plane B1. However, as mentioned earlier, in alternative embodiments, the detection range A1" of the first detection device 21', i.e., the fan-shaped plane area can be inclined to the reference plane B1. Although only the inclination in the cross-section of the automatic conveying device is shown in the figure, alternatively, the plane area of the fan-shaped plane area can also be inclined to the reference plane B1 in the longitudinal section. Although in the embodiment shown in FIG. 5, one or more first detection devices are arranged on the automatic conveying device, alternatively, one or more first detection devices can also be arranged at fixed positions that are spaced apart from the automatic conveying device, such as on the wall.

According to the invention, the processor is configured to determine, upon receiving a start-up command, whether an external object is present on the automatic conveying device. If no external object is present, the automatic conveying device is started, and if an external object is present, the automatic conveying device is not started. Such a judgment processs can be repeated several times at certain intervals before starting the automatic conveying device. If it is determined through multiple judgments that there is an external object, relevant personnel can be notified. The processor can be programmed to set the effective area of the detection ranges of one or more first detection devices (i.e., the area covering the step boards of the middle section), and determine whether an external object is present based on the detection signals in the effective area, while filtering the detection signals in the non-effective range. Such filtering method is known in the art.

According to reference embodiments that are each not claimed on their own, a method for detecting the presence of an external object on an automatic conveying device is provided, comprising: arranging one or more first detection devices on one or both sides of the automatic conveying device, where each first detection device has a detection range that is substantially a plane area, and the detection range of each first detection device covers at least a portion of the middle section; and determining, based at least partially on signals detected by the one or more first detection devices, the presence of an external object on the automatic conveying device.

In some further reference embodiments, the detection range of one first detection device or a combination of detection ranges of a plurality of first detection devices covers the entire middle section. In some further reference embodiments, the method further comprises: covering a first end and a second end of the automatic conveying device with the detection range of the one first detection device or the combination of detection ranges of the plurality of first detection devices when the automatic conveying device is a moving walkway. In some further reference embodiments, the method further comprises: arranging one or more second detection devices at a first end of the escalator, and arranging one or more third detection devices at a second end of the escalator when the automatic conveying device is an escalator, where the detection range of the one or more second detection devices is a plane area covering the first end, and the detection range of the one or more third detection devices is a plane area covering the second end; and determining the presence of an external object on the automatic conveying device based on the signals detected by the one or more first detection devices, the one or more second detection devices, and the one or more third detection devices.

According to another aspect of the present invention, an automatic start method for an automatic conveying device is provided, comprising: determining, upon receiving a start-up command, the presence of an external object on the automatic conveying device using the method according to the reference embodiments; and starting the automatic conveying device if no external object is present, and not starting the automatic conveying device if an external object is present.

## Claims

1. An automatic conveying device, comprising:
a first end (11) and a second end (12) opposite to each other; and
a middle section (13) between the first end (11) and the second end (12);
wherein, the automatic conveying device further comprises one or more first detection devices (21) arranged on one or both sides of the automatic conveying device, where each first detection device (21) has a detection range (A1) that is substantially a plane area, and the detection range (A1) of each first detection device (21) covers at least a portion of the middle section (13); and
a processor connected to the one or more first detection devices (21), and configured to determine, based at least partially on signals detected by the one or more first detection devices (21), whether an external object is present on the automatic conveying device, **characterized in that**
the processor is configured to determine, upon receiving a start-up command, whether an external object is present on the automatic conveying device, where if no external object is present, the automatic conveying device is started, and if an external object is present, the automatic conveying device is not started.

2. The automatic conveying device according to claim 1, wherein a detection range (A1) of one first detection device (21) or a combination of detection ranges (A11, A12) of a plurality of first detection devices (211, 212) covers the entire middle section (13).

3. The automatic conveying device according to claim 2, wherein the one or more first detection devices (21) are radar units, such as LiDARs, where the detection range (A1) of each first detection device (21) is substantially a fan-shaped plane area.

4. The automatic conveying device according to any of claims 1 to 3, wherein the detection range (A1) of each first detection device (21) is parallel to a reference plane (B1) of the middle section (13), and/or a maximum distance between the detection range (A1) of each first detection device (21) and the reference plane (B1) is less than 1 meter or less than 0.5 meters, where the reference plane (B1) of the middle section (13) is a plane where the middle section (13) is located or a plane obtained by connecting leading edges of step boards (161) of the middle section (13).

5. The automatic conveying device according to any of claims 1-4, wherein the automatic conveying device is a moving walkway with the first end (11), the second end (12), and the middle section (13) located in the same plane, where the detection range (A1) of the one first detection device (21) or the combination of plurality of first detection devices (211, 212) also covers the first end (11) and the second end (12) of the moving walkway.

6. The automatic conveying device according to any of claims 1-4, wherein the automatic conveying device is an escalator, the automatic conveying device further comprising: one or more second detection devices (22) and one or more third detection devices (23), where a detection range (A2) of the one or more second detection devices (22) is a plane area covering the first end (11), and a detection range (A3) of the one or more third detection devices (23) is a plane area covering the second end (12).

7. The automatic conveying device according to claim 6, wherein the one or more second detection devices (22) and the one or more third detection devices (23) are radar units, such as LiDARs, where a detection range of each of the one or more second detection devices (22) and the one or more third detection devices (23) is substantially a fan-shape d plane area.

8. The automatic conveying device according to claim 6 or 7, wherein the processor is configured to determine, based on signals detected by the one or more first detection devices (21), the one or more second detection devices (22), and the one or more third detection devices (23), whether an external object is present on the automatic conveying device.

9. The automatic conveying device according to any of claims 1 to 8, wherein the one or more first detection devices (21) are arranged inside skirt panels (14) on one or both sides of the automatic conveying device, and the skirt panels (14) comprise transparent window strips (140) extending in a direction parallel to the reference plane (B1), so that the skirt panels (14) do not block the detection range (A1) of the first detection device(s) (21).

10. The automatic conveying device according to any of claims 1 to 9. wherein the first detection device (21) is arranged outer side of the skirt panel(s) (14) on one or both sides of the automatic conveying device and on an outer side of the transparent sideplate (161) on the skirt panel(s) (14).

11. An automatic start method for an automatic conveying device, comprising:
arranging one or more first detection devices (21) on one or both sides of the automatic conveying device, where each first detection device (21) has a detection range that is substantially a plane area, and the detection range of each first detection device covers at least a portion of the middle section (13);
determining, based at least partially on signals detected by the one or more first detection devices (21), whether an external object is present on the automatic conveying device, when a start-up command is received; and
starting the automatic conveying device if no external object is present, and not starting the automatic conveying device if an external object is present.

12. The automatic start method according to claim 11, wherein a detection range (A1) of one first detection device (21) or a combination of detection ranges (A11, A12) of a plurality of first detection devices (211, 212) covers the entire middle section (13).

13. The automatic start method according to claim 12, further comprising:
covering a first end (11) and a second end (12) of the automatic conveying device with the detection range of the one first detection device (21) or the combination of detection ranges (A11, A12) of the plurality of first detection devices (211, 212) when the automatic conveying device is a moving walkway; and/or
further comprising: when the automatic conveying device is an escalator, arranging one or more second detection devices (22) at a first end (11) of the escalator, and arranging one or more third detection devices (23) at a second end (12) of the escalator, where a detection range of the one or more second detection devices (22) is a plane area covering the first end (11), and a detection range of the one or more third detection devices (23) is a plane area covering the second end (12); and
determining, based on signals detected by the one or more first detection devices (21), the one or more second detection devices (22), and the one or more third detection devices (23), whether an external object is present on the automatic conveying device.

## Patentansprüche

1. Automatische Fördervorrichtung, umfassend:
ein erstes Ende (11) und ein zweites Ende (12), die einander gegenüberliegen; und
einen Mittelabschnitt (13) zwischen dem ersten Ende (11) und dem zweiten Ende (12);
wobei die automatische Fördervorrichtung ferner eine oder mehrere erste Erfassungsvorrichtungen (21) umfasst, die auf einer oder beiden Seiten der automatischen Fördervorrichtung angeordnet sind, wobei jede erste Erfassungsvorrichtung (21) einen Erfassungsbereich (A1) aufweist, der im Wesentlichen ein ebener Bereich ist, und der Erfassungsbereich (A1) jeder ersten Erfassungsvorrichtung (21) mindestens einen Abschnitt des Mittelabschnitts (13) abdeckt; und
einen Prozessor, der mit der einen oder den mehreren ersten Erfassungsvorrichtungen (21) verbunden und konfiguriert ist, um mindestens teilweise basierend auf Signalen, die von der einen oder den mehreren ersten Erfassungsvorrichtungen (21) erfasst werden, zu bestimmen, ob sich ein externes Objekt auf der automatischen Fördervorrichtung befindet, **dadurch gekennzeichnet, dass**
der Prozessor konfiguriert ist, um beim Empfangen eines Startbefehls zu bestimmen, ob ein externes Objekt auf der automatischen Fördervorrichtung vorhanden ist, wobei, wenn kein externes Objekt vorhanden ist, die automatische Fördervorrichtung gestartet wird, und wenn ein externes Objekt vorhanden ist, die automatische Fördervorrichtung nicht gestartet wird.

2. Automatische Fördervorrichtung nach Anspruch 1, wobei ein Erfassungsbereich (A1) einer ersten Erfassungsvorrichtung (21) oder eine Kombination von Erfassungsbereichen (A11, A12) mehrerer erster Erfassungsvorrichtungen (211, 212) den gesamten Mittelabschnitt (13) abdeckt.

3. Automatische Fördervorrichtung nach Anspruch 2, wobei es sich bei der einen oder den mehreren ersten Erfassungsvorrichtungen (21) um Radareinheiten, wie LiDARs, handelt, wobei der Erfassungsbereich (A1) jeder ersten Erfassungsvorrichtung (21) im Wesentlichen ein lüfterförmiger ebener Bereich ist.

4. Automatische Fördervorrichtung nach einem der Ansprüche 1 bis 3, wobei der Erfassungsbereich (A1) jeder ersten Erfassungsvorrichtung (21) parallel zu einer Referenzebene (B1) des Mittelabschnitts (13) ist und/oder ein maximaler Abstand zwischen dem Erfassungsbereich (A1) jeder ersten Erfassungsvorrichtung (21) und der Referenzebene (B1) weniger als 1 Meter oder weniger als 0,5 Meter beträgt, wobei die Bezugsebene (B1) des Mittelabschnitts (13) eine Ebene ist, in der sich der Mittelabschnitt (13) befindet, oder eine Ebene, die durch Verbindung von Vorderkanten von Schrittbrettern (161) des Mittelabschnitts (13) erhalten wird.

5. Automatische Fördervorrichtung nach einem der Ansprüche 1 bis 4, wobei es sich bei der automatischen Fördervorrichtung um einen Fahrsteig handelt, bei dem das erste Ende (11), das zweite Ende (12) und der Mittelabschnitt (13) in derselben Ebene liegen, wobei der Erfassungsbereich (A1) der einen ersten Erfassungsvorrichtung (21) oder der Kombination einer Vielzahl von ersten Erfassungsvorrichtungen (211, 212) auch das erste Ende (11) und das zweite Ende (12) des Fahrsteigs erfasst.

6. Automatische Fördervorrichtung nach einem der Ansprüche 1 bis 4, wobei die automatische Fördervorrichtung eine Rolltreppe ist, die automatische Fördervorrichtung ferner umfassend: eine oder mehrere zweite Erfassungsvorrichtungen (22) und eine oder mehrere dritte Erfassungsvorrichtungen (23), wobei ein Erfassungsbereich (A2) der einen oder mehreren zweiten Erfassungsvorrichtungen (22) ein ebener Bereich ist, der das erste Ende (11) abdeckt, und ein Erfassungsbereich (A3) der einen oder mehreren dritten Erfassungsvorrichtungen (23) ein ebener Bereich ist, der das zweite Ende (12) abdeckt.

7. Automatische Fördervorrichtung nach Anspruch 6, wobei die eine oder die mehreren zweiten Erfassungsvorrichtungen (22) und die eine oder die mehreren dritten Erfassungsvorrichtungen (23) Radareinheiten, wie LiDARs, sind, wobei ein Erfassungsbereich jeder der einen oder der mehreren zweiten Erfassungsvorrichtungen (22) und der einen oder der mehreren dritten Erfassungsvorrichtungen (23) im Wesentlichen ein Bereich in Lüfterform d-Ebene ist.

8. Automatische Fördervorrichtung nach Anspruch 6 oder 7, wobei der Prozessor konfiguriert ist, um basierend auf Signalen, die von der einen oder den mehreren ersten Erfassungsvorrichtungen (21), der einen oder den mehreren zweiten Erfassungsvorrichtungen (22) und der einen oder den mehreren dritten Erfassungsvorrichtungen (23) erfasst werden, zu bestimmen, ob sich ein externes Objekt auf der automatischen Fördervorrichtung befindet.

9. Automatische Fördervorrichtung nach einem der Ansprüche 1 bis 8, wobei die eine oder die mehreren ersten Erfassungsvorrichtungen (21) innerhalb von Schürzenpaneelen (14) auf einer oder beiden Seiten der automatischen Fördervorrichtung angeordnet sind und die Schürzenpaneele (14) transparente Fensterstreifen (140) umfassen, die sich in einer Richtung parallel zur Bezugsebene (B1) erstrecken, sodass die Schürzenpaneele (14) den Erfassungsbereich (A1) der ersten Erfassungsvorrichtung(en) (21) nicht blockieren.

10. Automatische Fördervorrichtung nach einem der Ansprüche 1 bis 9, wobei die erste Erfassungsvorrichtung (21) an der Außenseite des/der Schürzenpaneel(e) (14) auf einer oder beiden Seiten der automatischen Fördervorrichtung und an einer Außenseite der transparenten Seitenplatte (161) auf dem/den Schürzenpaneel(en) (14) angeordnet ist.

11. Automatisches Startverfahren für eine automatische Fördervorrichtung, umfassend:
Anordnen einer oder mehrerer erster Erfassungsvorrichtungen (21) auf einer oder beiden Seiten der automatischen Fördervorrichtung, wobei jede erste Erfassungsvorrichtung (21) einen Erfassungsbereich aufweist, der im Wesentlichen ein ebener Bereich ist, und der Erfassungsbereich jeder ersten Erfassungsvorrichtung mindestens einen Abschnitt des Mittelabschnitts (13) abdeckt;
Bestimmen, mindestens teilweise basierend auf Signalen, die von der einen oder den mehreren ersten Erfassungsvorrichtungen (21) erfasst werden, ob ein externes Objekt auf der automatischen Fördervorrichtung vorhanden ist, wenn ein Startbefehl empfangen wird; und
Starten der automatischen Fördervorrichtung, wenn kein externes Objekt vorhanden ist, und Nichtstarten der automatischen Fördervorrichtung, wenn ein externes Objekt vorhanden ist.

12. Automatisches Startverfahren nach Anspruch 11, wobei ein Erfassungsbereich (A1) einer ersten Erfassungsvorrichtung (21) oder eine Kombination von Erfassungsbereichen (A11, A12) mehrerer erster Erfassungsvorrichtungen (211, 212) den gesamten Mittelabschnitt (13) abdeckt.

13. Automatisches Startverfahren nach Anspruch 12, ferner umfassend:
Abdecken eines ersten Endes (11) und eines zweiten Endes (12) der automatischen Fördervorrichtung mit dem Erfassungsbereich der einen ersten Erfassungsvorrichtung (21) oder der Kombination von Erfassungsbereichen (A11, A12) der mehreren ersten Erfassungsvorrichtungen (211, 212), wenn die automatische Fördervorrichtung ein Rollsteig ist; und/oder
ferner umfassend: wenn die automatische Fördervorrichtung eine Rolltreppe ist, Anordnen einer oder mehrerer zweiter Erfassungsvorrichtungen (22) an einem ersten Ende (11) der Rolltreppe und Anordnen einer oder mehrerer dritter Erfassungsvorrichtungen (23) an einem zweiten Ende (12) der Rolltreppe, wobei ein Erfassungsbereich der einen oder mehreren zweiten Erfassungsvorrichtungen (22) ein ebener Bereich ist, der das erste Ende (11) abdeckt, und ein Erfassungsbereich der einen oder mehreren dritten Erfassungsvorrichtungen (23) ein ebener Bereich ist, der das zweite Ende (12) abdeckt; und
Bestimmen, basierend auf Signalen, die von der einen oder den mehreren ersten Erfassungsvorrichtungen (21), der einen oder den mehreren zweiten Erfassungsvorrichtungen (22) und der einen oder den mehreren dritten Erfassungsvorrichtungen (23) erfasst werden, ob sich ein externes Objekt auf der automatischen Fördervorrichtung befindet.

## Revendications

1. Dispositif de transport automatique, comprenant :
une première extrémité (11) et une seconde extrémité (12) opposées l'une à l'autre ; et
une section médiane (13) entre la première extrémité (11) et la seconde extrémité (12) ;
dans lequel, le dispositif de transport automatique comprend également un ou plusieurs premiers dispositifs de détection (21) agencés sur un ou les deux côtés du dispositif de transport automatique, où chaque premier dispositif de détection (21) a une plage de détection (A1) qui est sensiblement une zone plane, et la plage de détection (A1) de chaque premier dispositif de détection (21) couvre au moins une partie de la section médiane (13) ; et
un processeur connecté aux un ou plusieurs premiers dispositifs de détection (21), et configuré pour déterminer, en fonction au moins en partie de signaux détectés par les un ou plusieurs premiers dispositifs de détection (21), si un objet externe est présent sur le dispositif de transport automatique, **caractérisé en ce que**
le processeur est configuré pour déterminer, lors de la réception d'une instruction de démarrage, si un objet externe est présent sur le dispositif de transport automatique, où si aucun objet externe n'est présent, le dispositif de transport automatique est démarré, et si un objet externe est présent, le dispositif de transport automatique n'est pas démarré.

2. Dispositif de transport automatique selon la revendication 1, dans lequel une plage de détection (A1) d'un premier dispositif de détection (21) ou une combinaison de plages de détection (A11, A12) d'une pluralité de premiers dispositifs de détection (211, 212) couvre toute la section médiane (13).

3. Dispositif de transport automatique selon la revendication 2, dans lequel les un ou plusieurs premiers dispositifs de détection (21) sont des unités radar, telles que des LiDAR, où la plage de détection (A1) de chaque premier dispositif de détection (21) est sensiblement une zone plane en forme d'éventail.

4. Dispositif de transport automatique selon l'une quelconque des revendications 1 à 3, dans lequel la plage de détection (A1) de chaque premier dispositif de détection (21) est parallèle à un plan de référence (B1) de la section médiane (13), et/ou une distance maximale entre la plage de détection (A1) de chaque premier dispositif de détection (21) et le plan de référence (B1) est inférieure à 1 mètre ou inférieure à 0,5 mètre, où le plan de référence (B1) de la section médiane (13) est un plan où se trouve la section médiane (13) ou un plan obtenu en reliant des bords d'attaque de marchepieds (161) de la section médiane (13).

5. Dispositif de transport automatique selon l'une quelconque des revendications 1 à 4, dans lequel le dispositif de transport automatique est un trottoir roulant dont la première extrémité (11), la seconde extrémité (12) et la section médiane (13) sont situées dans le même plan, où la plage de détection (A1) du premier dispositif de détection (21) ou de la combinaison d'une pluralité de premiers dispositifs de détection (211, 212) couvre également la première extrémité (11) et la seconde extrémité (12) du trottoir roulant.

6. Dispositif de transport automatique selon l'une quelconque des revendications 1 à 4, dans lequel le dispositif de transport automatique est un escalator, le dispositif de transport automatique comprenant également : un ou plusieurs deuxièmes dispositifs de détection (22) et un ou plusieurs troisièmes dispositifs de détection (23), où une plage de détection (A2) des un ou plusieurs deuxièmes dispositifs de détection (22) est une zone plane couvrant la première extrémité (11), et une plage de détection (A3) des un ou plusieurs troisièmes dispositifs de détection (23) est une zone plane couvrant la seconde extrémité (12).

7. Dispositif de transport automatique selon la revendication 6, dans lequel les un ou plusieurs deuxièmes dispositifs de détection (22) et les un ou plusieurs troisièmes dispositifs de détection (23) sont des unités radar, telles que des LiDAR, où une plage de détection de chacun des un ou plusieurs deuxièmes dispositifs de détection (22) et des un ou plusieurs troisièmes dispositifs de détection (23) est sensiblement une zone plane en forme d'éventail.

8. Dispositif de transport automatique selon la revendication 6 ou 7, dans lequel le processeur est configuré pour déterminer, en fonction de signaux détectés par les un ou plusieurs premiers dispositifs de détection (21), les un ou plusieurs deuxièmes dispositifs de détection (22) et les un ou plusieurs troisièmes dispositifs de détection (23), si un objet externe est présent sur le dispositif de transport automatique.

9. Dispositif de transport automatique selon l'une quelconque des revendications 1 à 8, dans lequel les un ou plusieurs premiers dispositifs de détection (21) sont agencés à l'intérieur de panneaux de jupe (14) sur un ou les deux côtés du dispositif de transport automatique, et les panneaux de jupe (14) comprennent des bandes de fenêtre transparentes (140) se prolongeant dans une direction parallèle au plan de référence (B1), de sorte que les panneaux de jupe (14) ne bloquent pas la plage de détection (A1) du ou des premiers dispositifs de détection (21).

10. Dispositif de transport automatique selon l'une quelconque des revendications 1 à 9, dans lequel le premier dispositif de détection (21) est agencé sur le côté extérieur du ou des panneaux de jupe (14) sur un ou les deux côtés du dispositif de transport automatique et sur un côté extérieur de la plaque latérale transparente (161) sur le ou les panneaux de jupe (14).

11. Procédé de démarrage automatique pour un dispositif de transport automatique, comprenant :
l'agencement d'un ou plusieurs premiers dispositifs de détection (21) sur un ou les deux côtés du dispositif de transport automatique, où chaque premier dispositif de détection (21) a une plage de détection qui est sensiblement une zone plane, et la plage de détection de chaque premier dispositif de détection couvre au moins une partie de la section médiane (13) ;
la détermination, en fonction au moins en partie de signaux détectés par les un ou plusieurs premiers dispositifs de détection (21), de si un objet externe est présent sur le dispositif de transport automatique, lorsqu'une instruction de démarrage est reçue ; et
le démarrage du dispositif de transport automatique si aucun objet externe n'est présent, et l'absence de démarrage du dispositif de transport automatique si un objet externe est présent.

12. Procédé de démarrage automatique selon la revendication 11, dans lequel une plage de détection (A1) d'un premier dispositif de détection (21) ou une combinaison de plages de détection (A11, A12) d'une pluralité de premiers dispositifs de détection (211, 212) couvre toute la section médiane (13).

13. Procédé de démarrage automatique selon la revendication 12, comprenant également :
la couverture d'une première extrémité (11) et d'une seconde extrémité (12) du dispositif de transport automatique avec la plage de détection du premier dispositif de détection (21) ou la combinaison des plages de détection (A11, A12) de la pluralité de premiers dispositifs de détection (211, 212) lorsque le dispositif de transport automatique est un trottoir roulant ; et/ou
comprenant également : lorsque le dispositif de transport automatique est un escalator, l'agencement d'un ou plusieurs deuxièmes dispositifs de détection (22) au niveau d'une première extrémité (11) de l'escalator, et l'agencement d'un ou plusieurs troisièmes dispositifs de détection (23) au niveau d'une seconde extrémité (12) de l'escalator, où une plage de détection des un ou plusieurs deuxièmes dispositifs de détection (22) est une zone plane couvrant la première extrémité (11), et une plage de détection des un ou plusieurs troisièmes dispositifs de détection (23) est une zone plane couvrant la seconde extrémité (12) ; et
la détermination, en fonction de signaux détectés par les un ou plusieurs premiers dispositifs de détection (21), les un ou plusieurs deuxièmes dispositifs de détection (22) et les un ou plusieurs troisièmes dispositifs de détection (23), de si un objet externe est présent sur le dispositif de transport automatique.
